# FASCICULE DE BREVET EUROPEEN

(11) **EP 1 018 448 B1**
(45) Date de publication et mention de la délivrance du brevet: **02.04.2003**
(21) Numéro de dépôt: 00400011.3
(22) Date de dépôt: 04.01.2000
(51) Int. Cl.: B60K 5/12, F16F 1/38, F16F 1/387

(54) **Dispositif de suspension d'un groupe motopropulseur dans la caisse d'un vehicule automobile**
Vorrichtung zur Aufhängung einer Antriebseinheit am Kraftfahrzeugaufbau
Device for the suspension of a propulsion unit to the vehicle body

(30) Priorité: 08.01.1999 FR 9900154
(43) Date de publication de la demande: 12.07.2000
(73) Titulaire: Peugeot Citroen Automobiles SA, 92200 Neuilly sur Seine (FR)
(72) Inventeur: Le Fol, Marcel, 35410 Domloup (FR); Le Sommer, Francis, 35131 Pont Pean (FR)
(74) Mandataire: Lanceplaine, Jean-Claude

(56) Documents cités:
- EP-A- 0 647 787
- FR-A- 2 731 184

## Description

La présente invention a pour objet un dispositif de suspension d'un groupe motopropulseur dans la caisse d'un véhicule automobile.

Les dispositifs de suspension d'un groupe motopropulseur dans la caisse d'un véhicule automobile comportent généralement des supports élastiques appelés cales porteuses qui supportent le poids du groupe motopropulseur ainsi que ses forces d'inertie dues aux déplacements du véhicule et au moins un moyen de liaison appelé anti-couple qui maintient le groupe motopropulseur en reprenant les efforts en marche avant et en marche arrière.

Le moyen de liaison anti-couple doit présenter une élasticité suffisante pour filtrer comme les cales porteuses, les vibrations engendrées par le groupe motopropulseur, principalement lors du fonctionnement de celui-ci au ralentit ou à faible vitesse, et permettre d'opposer une résistance croissante au basculement quand le couple de traction augmente.

Pour obtenir ce compromis, les moyens de liaison anti-couple utilisés jusqu'à présent comprennent au moins une biellette qui relie la caisse du véhicule au groupe motopropulseur par l'intermédiaire d'articulations élastiques.

Mais l'efficacité et la fiabilité des divers éléments élastiques du dispositif de suspension s'avèrent parfois imparfaites à cause des efforts secondaires dus à un montage sous précontrainte de la biellette et les tolérances de fabrication du groupe motopropulseur et de la caisse du véhicule entraînent nécessairement des dispersions dimensionnelles au droit de la biellette ce qui peut provoquer au moment du montage une mise sous contrainte initiale anormale de la biellette et des éléments élastiques.

Ces dispersions dimensionnelles peuvent également provoquer des vibrations intempestives si bien que dans certains cas il est nécessaire d'équiper la biellette de butées.

On connaît dans le document EP-A-0647 787 une biellette de reprise de couple pour moteur de véhicule, du type comportant à au moins l'une de ses extrémités une articulation tubulaire élastique. Cette articulation comprend un noyau intérieur de fixation et au moins un coussin de matériau élastique reliant par adhérisation ledit noyau à la surface interne d'une armature tubulaire extérieure.

On connaît également dans le document FR-A-2 731 184, qui sert de base à la présentation en deux parties de la revendication 1, un dispositif de suspension d'un groupe motopropulseur dans la caisse d'un véhicule automobile, comprenant au moins une articulation anti-couple comportant une armature extérieure montée dans un logement d'un élément de réception solidaire du groupe motopropulseur, un noyau libre disposé à l'intérieur de l'armature et relié à la caisse du véhicule et, entre l'armature extérieure et le noyau libre, des moyens de reprise des efforts en marche avant et en marche arrière et des moyens de positionnement du noyau libre à l'intérieur de ladite armature extérieure.

L'invention a pour but de proposer un dispositif de suspension anti-couple qui permet d'obtenir de grandes possibilités de rattrapage des dispersions liées au groupe motopropulseur et à la caisse des véhicules tout en étant de fabrication et de montage simplifiés et d'un coût inférieur aux dispositifs utilisés jusqu'à présent.

L'invention a donc pour objet un dispositif de suspension d'un groupe motopropulseur dans la caisse d'un véhicule automobile selon la revendication 1.

Selon d'autres caractéristiques de l'invention :
- l'armature extérieure a une forme complémentaire au logement de l'élément de réception et de préférence une forme cylindrique,
- l'armature extérieure est en acier ou en aluminium ou en matière thermoplastique,
- l'armature extérieure comporte sur sa face externe une couche en matériau élastomère munie de stries horizontales,
- chaque butée est en contact avec une génératrice du noyau libre,
- les butées et les tubes forment une seule pièce en matériau élastomère fixée par adhérisation sur la face interne de l'armature,
- le noyau libre est en acier ou en fonte ou en aluminium et déborde de part et d'autre de l'armature,
- le noyau libre présente une section transversale rectangulaire dont les grandes faces s'étendent perpendiculairement à l'axe longitudinal du véhicule, chaque petite face du noyau libre étant disposée dans la gorge de guidage d'un tube et chaque grande face étant en contact avec une butée,
- Le noyau libre comporte sur ses faces externes un revêtement anti-adhésif,
- le noyau libre comporte un orifice axial de passage d'un organe de liaison avec un élément de support solidaire de la caisse du véhicule,
- l'orifice axial présente une forme oblongue,
- l'élément de support est formé par une chape comportant deux branches opposées et parallèles entre lesquelles est monté le noyau libre, chaque branche comportant un organe d'arrêt en rotation du noyau libre.

Les caractéristiques et avantages de l'invention apparaîtront au cours de la description qui va suivre, donnée à titre d'exemple et faite en référence aux dessins annexés, sur lesquels :
- la Fig. 1 est une vue schématique latérale d'une articulation anti-couple d'un dispositif de suspension conforme à l'invention,
- la Fig. 2 est une vue en coupe de l'articulation anti-couple,
- la Fig. 3 est une vue en coupe selon la ligne 3-3 de la Fig. 2,
- la Fig. 4 est une vue en coupe selon la ligne 4-4 de la Fig. 2,
- la Fig. 5 est une vue partielle en coupe axiale d'une variante de l'armature extérieure de l'articulation anti-couple,
- la Fig. 6 est une vue schématique en coupe axiale de l'articulation anti-couple montée dans un élément de support solidaire de la caisse du véhicule.

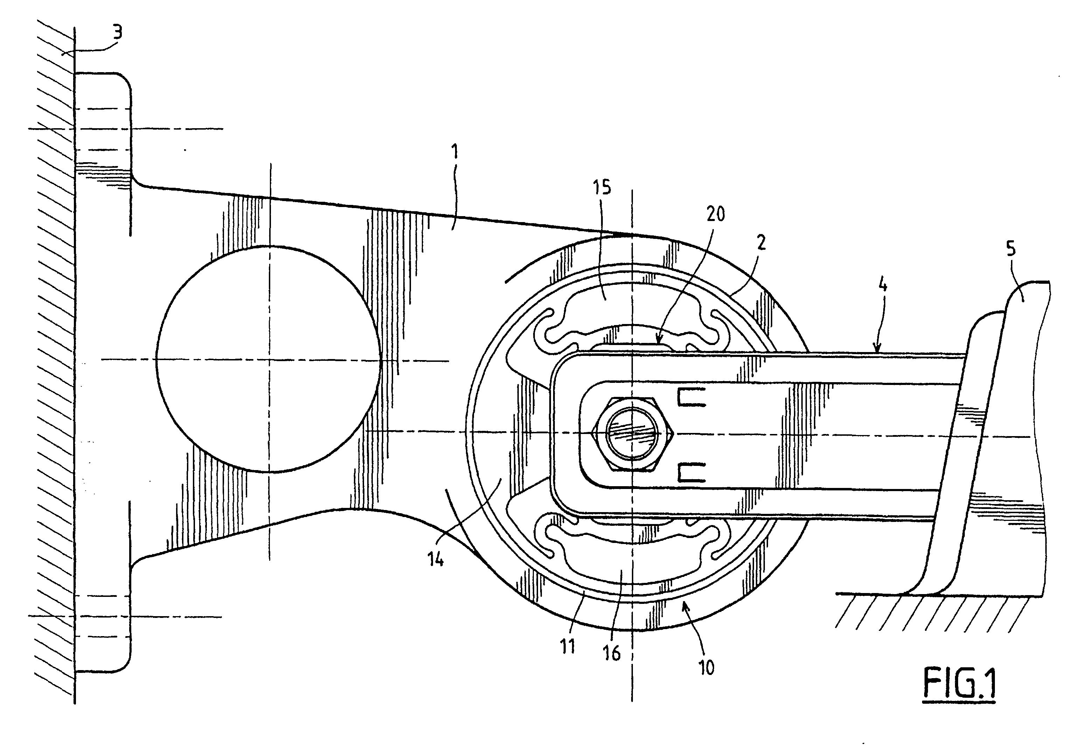

Sur la Fig. 1, on a représenté schématiquement une articulation anti-couple d'un dispositif de suspension d'un groupe motopropulseur 3 d'un véhicule automobile.

Cette articulation anti-couple désignée dans son ensemble par la référence 10 se compose d'une armature extérieure 11 montée dans un logement 2 d'un élément de réception 1, comme par exemple le palier relais solidaire de la structure du groupe motopropulseur 3.

L'articulation élastique 10 se compose également d'un noyau libre 20 disposé à l'intérieur de l'armature 11 et relié par l'intermédiaire d'une chape 4 à un élément solidaire de la caisse 5 du véhicule, comme par exemple le berceau de support du groupe motopropulseur 3.

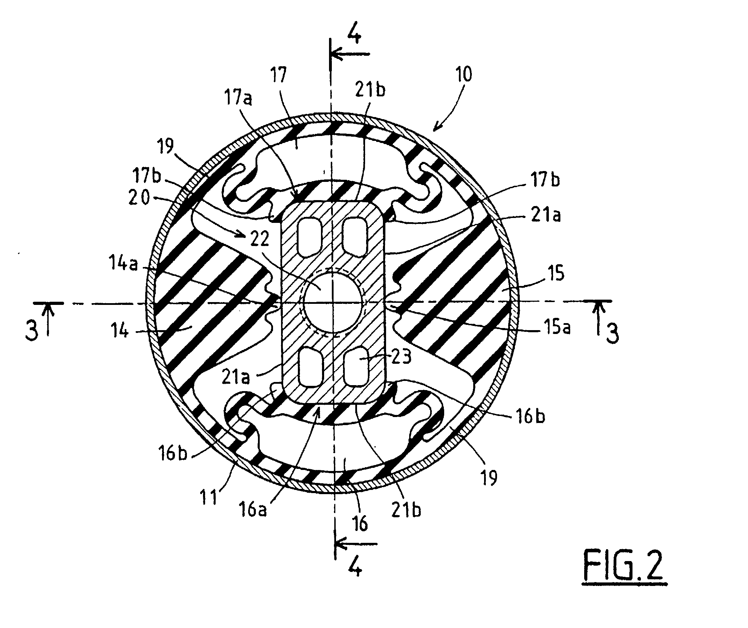

En se reportant maintenant aux Figs. 2 à 5, on va décrire plus en détail les différents éléments composant l'articulation anti-couple 10.

L'armature extérieure 11 réalisée en acier ou en aluminium ou en matière thermoplastique présente une forme complémentaire au logement 2 de l'élément de réception 1 et de préférence présente une forme cylindrique.

L'alésage du logement 2 destiné à recevoir l'armature extérieure 11 est usiné ou brut.

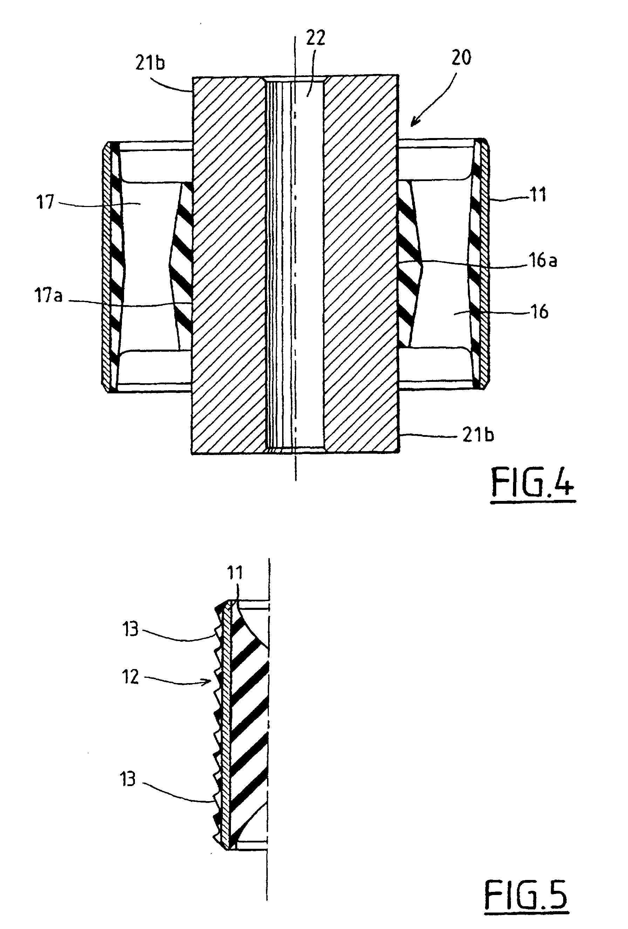

Dans le cas où l'alésage du logement 2 est brut, la face externe de l'armature 11 comporte une couche 12 en matériau élastomère et de faible épaisseur, ainsi que représenté à la Fig. 5.

Cette couche 12 est munie d'une succession de stries horizontales 13 en forme de sapin permettant de faciliter le montage de l'armature 11 à l'intérieur du logement 2 et de s'opposer à son extraction.

L'articulation anti-couple 10 comporte, entre l'armature extérieure 11 et le noyau libre 20, des moyens de reprise des efforts en marche avant c'est à dire en pleine charge et en marche arrière c'est à dire en rétro et des moyens de positionnement de ce noyau libre 20 à l'intérieur de ladite armature 11.

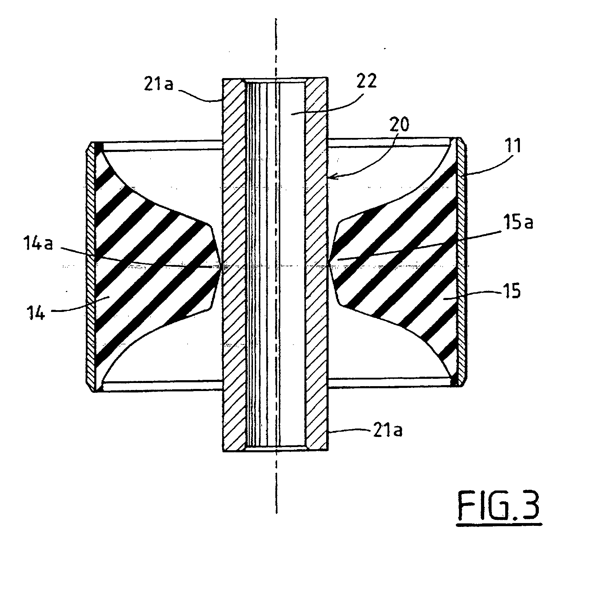

En se reportant maintenant aux Figs. 2 et 3, on va décrire les moyens de reprise des efforts en marche avant et en marche arrière.

Ces moyens de reprise des efforts sont formés par deux butées opposées, respectivement 14 et 15, en matériau élastomère, en saillie à l'intérieur de l'armature 11 et fixées sur la face interne de ladite armature.

Chaque butée 14 et 15 s'étend parallèlement à l'axe longitudinal du véhicule et est en contact avec le noyau libre 20, de préférence avec une génératrice de ce noyau 20.

Pour cela, chaque butée 14 et 15 comporte sur sa face en regard du noyau libre 20, un bourrelet, respectivement 14a et 15a, qui s'étend sur toute la hauteur de la butée correspondante.

Ces butées 14 et 15 peuvent être symétriques et/ou dissymétriques de façon à répondre à des caractéristiques déterminées de flexibilité qui ne doivent pas forcément être les mêmes pour chacune de celles-ci.

Les moyens de positionnement du noyau libre 20 sont formés par deux tubes en matériau élastomère, respectivement 16 et 17, opposés et fixés sur la face interne de l'armature 11 entre les butées 14 et 15.

Ainsi, les butées 14 et 15 et les tubes 16 et 17 sont disposés alternativement les uns par rapport aux autres et à 90° les unes des autres.

Chaque tube 16 et 17 comportent une gorge verticale, respectivement 16a et 17a, de guidage du noyau libre 20.

La gorge 16a du tube 16 est délimitée par des languettes 16b qui s'étendent sur toute la hauteur de ladite gorge 16a et la gorge 17a du tube 17 est également délimitée par deux languettes 17b qui s'étendent sur toute la hauteur de ladite gorge 17a.

Les tubes 16 et 17 ont pour but d'assurer le maintien du noyau libre 20 pendant le transport et le montage de l'articulation anti-couple et ces tubes possèdent une très faible raideur dans le plan vertical et dans le plan longitudinal.

De plus, les tubes 16 et 17 doivent permettre le glissement du noyau libre 20 afin de rattraper les désalignements dus à la dispersion de fabrication des véhicules automobiles.

La zone d'appui de ces tubes 16 et 17 sur le noyau libre 20 peut être graissée ou subir un traitement glissant afin de ne pas perturber les mouvements transversaux du groupe motopropulseur 3 en injectant des efforts parasites.

Comme représenté à la Fig. 2, les butées 14 et 15 et les tubes 16 et 17 sont reliés entre eux par des portions 19 de matériau élastomère pour former une seule pièce en matériau élastomère fixée par adhérisation sur la face interne de l'armature 11.

Le noyau libre 20 en acier ou en fonte ou en aluminium coulé ou extrudé a, dans l'exemple de réalisation représenté sur les figures, une section transversale rectangulaire et déborde de part et d'autre de l'armature 11 pour absorber les désalignements transversaux du groupe motopropulseur 3 par rapport à la caisse du véhicule et accepter les débattements transversaux dudit groupe motopropulseur.

Ce noyau libre 20 est disposé dans l'armature extérieure 11 de telle manière que les grandes faces 21a s'étendent perpendiculairement à l'axe du véhicule et que chaque petite face 21b soit disposée dans la gorge de guidage de l'un des tubes 16 et 17.

De plus, chaque butée 14 et 15 est en contact avec une grande face 21a du noyau libre 20.

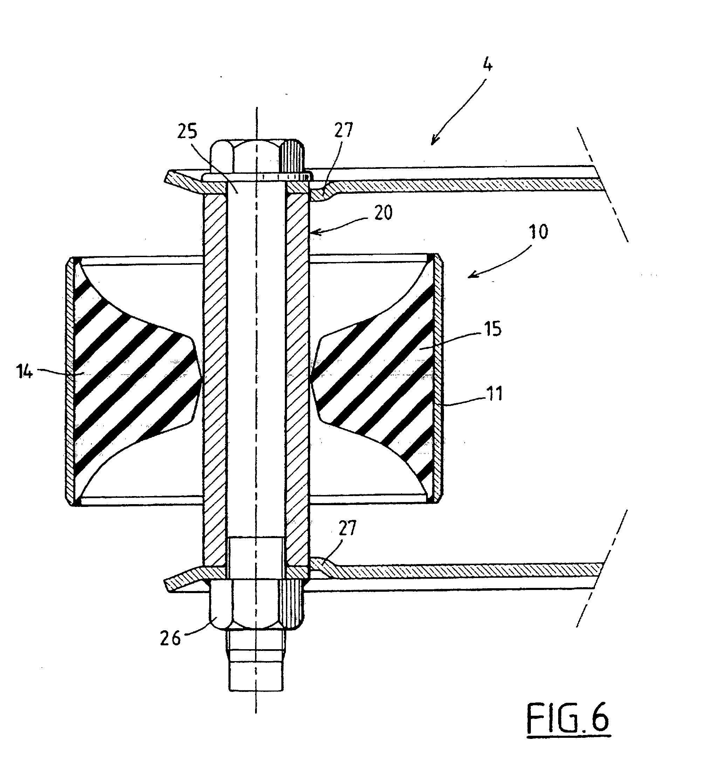

Ce noyau libre 20 comporte un orifice axial 22 de passage d'un organe de liaison 25 avec l'élément de support constitué par une chape 4, comme représentée à la Fig. 6.

L'orifice axial 22 peut avoir une forme oblongue afin de donner une latitude de réglage dans le sens vertical et le noyau libre 20 peut être allégé par des évidements 23.

Afin d'améliorer le glissement du noyau libre 20 entre les tubes 16 et 17, les faces externes de ce noyau libre 20 peuvent être recouvertes d'un revêtement anti-adhésif.

Le montage de l'articulation anti-couple 10 est réalisé de la façon suivante.

Tout d'abord, l'armature extérieure 11 est emmanchée par exemple par la presse dans le logement 2 ménagé dans l'élément de réception 1 et cette armature extérieure 11 est positionnée de façon à orienter les butées 14 et 15 suivant l'axe longitudinal du véhicule.

Ensuite, le noyau libre 20 est mis en place dans l'armature 11 en comprimant les tubes 16 et 17 et en introduisant le noyau libre 20 dans les gorges de guidage 16a et 17a desdits tubes 16 et 17.

Les languettes 16b et 17b des gorges 16a et 17a assurent le guidage du noyau libre 20 et les butées 14 et 15 assurent le maintien de ce noyau libre 20 car la forme des extrémités 14a et 15a donne une légère pression sur le noyau 20 avec une faible raideur.

Après ce préassemblage de l'articulation anti-couple 10 dans l'élément de réception 1, comme par exemple le palier relais, cet élément 1 est fixé sur le groupe motopropulseur 3.

Ensuite, le noyau libre 20 est introduit entre les deux branches de la chape 4 lors de la descente du groupe motopropulseur 3 sur le berceau et avant la descente de la caisse du véhicule.

La chape 4 présente de préférence un bord en forme de cuvette, comme représenté à la Fig. 6, pour faciliter l'introduction du noyau libre 20 et également augmenter l'inertie de ladite chape 4.

Ensuite, l'élément de liaison 25 constitué par une vis est introduit dans l'orifice 22 du noyau libre 20 en traversant les branches de ladite chape 4.

L'extrémité filetée de la vis 25 est vissée dans un écrou 26 fixé au-dessous de la branche inférieure de la chape 4.

Pour empêcher la rotation du noyau libre 20 lors du vissage de la vis 25, chaque branche de la chape 4 comporte au moins un organe d'arrêt en rotation dudit noyau 20.

Ces organes d'arrêt en rotation sont formés par exemple par des demi-crevés 27 ou des poinçonnages réalisés sur les branches de la chape 4. Ces organes d'arrêt peuvent également être constitués par une nervure ou par tout autre déformation appropriée.

Dans le cas d'une chape liée à la caisse du véhicule, l'articulation anti-couple 10 sera reliée à la chape lors de la descente de la caisse sur le groupe motopropulseur en introduisant le noyau libre 20 dans ladite chape qui est ensuite vissé ou soudée sur le berceau du groupe motopropulseur.

L'articulation anti-couple ainsi réalisée permet de reprendre les efforts en marche avant et marche arrière, tout en assurant une sécurité lors d'un choc. En effet, l'effet d'impact peut être dirigé suivant la géométrie de la chape ce qui permet de faire basculer le groupe motopropulseur dans la direction voulue pour éviter l'intrusion de celui-ci dans l'habitacle.

De plus, les débattements verticaux n'injectent que peu d'efforts dans la structure du véhicule, seul les accélérations et les décélérations sont filtrées.

L'articulation anti-couple présente également l'avantage d'être facile à monter et d'offrir de grandes possibilités de rattrapage des dispersions liées au groupe motopropulseur et la caisse du véhicule, tout en étant d'un coût inférieur aux dispositifs utilisés jusqu'à présent.

## Revendications

1. Dispositif de suspension d'un groupe motopropulseur dans la caisse d'un véhicule automobile comprenant au moins une articulation anti-couple (10) comportant une armature extérieure (11) montée dans un logement (2) d'un élément de réception (1) solidaire du groupe motopropulseur (3), un noyau libre (20) disposé à l'intérieur de l'armature (11) et relié à la caisse du véhicule et, entre l'armature extérieure (11) et le noyau libre (20), des moyens (14, 15) de reprise des efforts en marche avant et en marche arrière et des moyens (16, 17) de positionnement du noyau libre (20) à l'intérieur de ladite armature extérieure **caractérisé en ce que** les moyens de reprise des efforts sont formés par deux butées (14, 15) en matériau élastomère opposées, en saillie à l'intérieur de l'armature (11) et fixées sur la face interne de ladite armature (11), chaque butée (14,15) s'étendant parallèlement à l'axe longitudinal du véhicule et étant en contact avec le noyau libre (20) et **en ce que** les moyens de positionnement du noyau libre sont formés par deux tubes (16,17) en matériau élastomère opposés et fixés sur la face interne de l'armature (11) entre les butées (14, 15), chaque tube (16, 17) comportant une gorge verticale (16a, 17a) de guidage du noyau libre (20).

2. Dispositif selon la revendication 1, **caractérisé en ce que** l'armature extérieure (11) a une forme complémentaire au logement (2) de l'élément de réception (1) et de préférence une forme cylindrique.

3. Dispositif selon la revendication 1 ou 2, **caractérisé en ce que** l'armature extérieure (11) est en acier ou en aluminium ou en matière thermoplastique.

4. Dispositif selon l'une quelconque des revendications précédentes, **caractérisé en ce que** l'armature extérieure (11) comporte sur sa face externe une couche (12) en matériau élastomère munie de stries horizontales (13).

5. Dispositif selon l'une quelconque des revendication précédentes, **caractérisé en ce que** chaque butée (14, 15) est en contact avec une génératrice du noyau libre (20).

6. Dispositif selon l'une quelconque des revendications précédentes, **caractérisé en ce que** les butées (14, 15) et les tubes (16, 17) forment une seule pièce en matériau élastomère fixée par adhérisation sur la face interne de l'armature (11).

7. Dispositif selon l'une quelconque des revendications 1 à 5, **caractérisé en ce que** le noyau libre (20) est en acier ou en fonte ou en aluminium et déborde de part et d'autre de l'armature extérieure (11).

8. Dispositif selon l'une quelconque des revendications 1 à 5 ou 7, **caractérisé en ce que** le noyau libre (20) présente une section transversale rectangulaire dont les grandes faces (21a) s'étendent perpendiculairement à l'axe du véhicule, chaque petite face (21b) du noyau libre (20) étant disposée dans la gorge de guidage (16a, 17a) d'un tube (16, 17) et chaque grande face (21a) étant en contact avec une butée (14,15).

9. Dispositif selon la revendication 8, **caractérisé en ce que** le noyau libre (20) comporte sur ses faces externes un revêtement anti-adhésif.

10. Dispositif selon la revendication 8, **caractérisé en ce que** le noyau libre (20) comporte un orifice axial (22) de passage d'un organe de liaison (25) avec un élément de support (4) solidaire de la caisse du véhicule.

11. Dispositif selon la revendication 12, **caractérisé en ce que** l'orifice axial (22) présente une forme oblongue.

12. Dispositif selon la revendication 10, **caractérisé en ce que** l'élément de support (4) est formé par une chape comportant deux branches opposées parallèles entre lesquelles est monté le noyau libre (20), chaque branche comportant un organe (27) d'arrêt en rotation dudit noyau libre (20).

## Patentansprüche

1. Aufhängungsvorrichtung für einen Antriebsmotor in der Karosserie eines Kraftfahrzeugs, mit wenigstens einem Drehmomentkompensationsgelenk (10), das einen äußeren Mantel (11), der in einem Aufnahmesitz (2) eines mit dem Antriebsmotor (3) fest verbundenen Aufnahmeelements (1) angebracht ist, einen freien Kern (20), der in dem Mantel (11) angeordnet und mit der Karosserie des Fahrzeugs verbunden ist, und zwischen dem äußeren Mantel (11) und dem freien Kern (20) Vorwärtslauf- und Rückwärtslauf-Kraftaufnahmemittel (14, 15) sowie Mittel (16, 17) für die Positionierung des freien Kerns (20) in dem äußeren Mantel umfaßt, **dadurch gekennzeichnet, daß** die Kraftaufnahmemittel durch zwei gegenüberliegende Anschläge (14, 15) aus einem elastomeren Werkstoff gebildet sind, die in den Mantel (11) vorstehen und an der Innenfläche des Mantels (11) befestigt sind, wobei sich jeder Anschlag (14, 15) parallel zur Längsachse des Fahrzeugs erstreckt und mit dem freien Kern (20) in Kontakt ist, und daß die Mittel für die Positionierung des freien Kerns durch zwei gegenüberliegende Rohre (16, 17) aus einem elastomeren Werkstoff gebildet sind und an der Innenfläche des Mantels (11) zwischen den Anschlägen (14, 15) befestigt sind, wobei jedes Rohr (16, 17) eine vertikale Nut (16a, 17a) für die Führung des freien Kerns (20) umfaßt.

2. Vorrichtung nach Anspruch 1, **dadurch gekennzeichnet, daß** der äußere Mantel (11) eine zum Aufnahmesitz (2) des Aufnahmeelements (1) komplementäre und vorzugsweise zylindrische Form hat.

3. Vorrichtung nach Anspruch 1 oder 2, **dadurch gekennzeichnet, daß** der äußere Mantel (11) aus Stahl oder Aluminium oder einem thermoplastischen Werkstoff hergestellt ist.

4. Vorrichtung nach einem der vorhergehenden Ansprüche, **dadurch gekennzeichnet, daß** der äußere Mantel (11) auf seiner äußeren Fläche eine Schicht (12) aus einem elastomeren Werkstoff, die mit horizontalen Rillen (13) versehen ist, aufweist.

5. Vorrichtung nach einem der vorhergehenden Ansprüche, **dadurch gekennzeichnet, daß** jeder Anschlag (14, 15) mit einer Erzeugenden des freien Kerns (20) in Kontakt ist.

6. Vorrichtung nach einem der vorhergehenden Ansprüche, **dadurch gekennzeichnet, daß** die Anschläge (14, 15) und die Rohre (16, 17) aus einem elastomeren Werkstoff einteilig hergestellt sind und durch Kleben an der Innenfläche des Mantels (11) befestigt sind.

7. Vorrichtung nach einem der Ansprüche 1 bis 5, **dadurch gekennzeichnet, daß** der freie Kern (20) aus Stahl oder Gußeisen oder Aluminium hergestellt ist und beiderseits des äußeren Mantels (11) vorsteht.

8. Vorrichtung nach einem der Ansprüche 1 bis 5 oder 7, **dadurch gekennzeichnet, daß** der freie Kern (20) einen rechtwinkligen transversalen Querschnitt besitzt, dessen große Flächen (21a) sich senkrecht zur Achse des Fahrzeugs erstrecken, während jede kleine Fläche (21b) des freien Kerns (20) in der Führungsnut (16a, 17a) eines Rohrs (16, 17) angeordnet ist und jede große Fläche (21a) mit einem Anschlag (14, 15) in Kontakt ist.

9. Vorrichtung nach Anspruch 8, **dadurch gekennzeichnet, daß** der freie Kern (20) auf seinen äußeren Flächen eine Antihaftbeschichtung aufweist.

10. Vorrichtung nach Anspruch 8, **dadurch gekennzeichnet, daß** der freie Kern (20) eine axiale Öffnung (22) für den Durchgang eines Verbindungsorgans (25) mit einem mit der Fahrzeugkarosserie fest verbundenen Tragelement (4) umfaßt.

11. Vorrichtung nach Anspruch 10, **dadurch gekennzeichnet, daß** die axiale Öffnung (22) eine längliche Form besitzt.

12. Vorrichtung nach Anspruch 10, **dadurch gekennzeichnet, daß** das Tragelement (4) aus einer Gabel gebildet ist, die zwei einander gegenüberliegende parallele Schenkel aufweist, zwischen denen der freie Kern (20) angebracht ist, wobei jeder Schenkel ein Organ (27) für die rotatorische Arretierung des freien Kerns (20) aufweist.

## Claims

1. Device for the suspension of a power unit in the body of a motor vehicle, comprising at least one anti-torque joint (10) having an outer framework (11) mounted in a housing (2) of a receiving element (1) integral with the power unit (3), a free core (20) arranged inside the framework (11) and connected to the vehicle body and, between the outer framework (11) and the free core (20), means (14, 15) for taking up the forces in forward motion and in reverse motion and means (16, 17) for positioning the free core (20) inside the said outer framework (11), **characterised in that** the means for taking up the forces are formed by two opposite abutments (14, 15) made of elastomeric material, projecting inside the framework (11) and fixed on the inner surface of the said framework (11), each abutment (14, 15) extending parallel to the longitudinal axis of the vehicle and being in contact with the free core (20), and **in that** the means for positioning the free core are formed by two opposite tubes (16, 17) made of elastomeric material and fixed on the inner surface of the framework (11) between the abutments (14, 15), each tube (16, 17) having a vertical groove (16a, 17a) for guiding the free core (20).

2. Device according to Claim 1, **characterised in that** the outer framework (11) has a shape complementary to the receptacle (2) of the receiving element (1) and preferably a cylindrical shape.

3. Device according to Claim 1 or 2, **characterised in that** the outer framework (11) is made of steel or aluminium or thermoplastic.

4. Device according to any one of the preceding claims, **characterised in that** the outer framework (11) has, on its outer surface, a covering (12) made of elastomeric material and provided with horizontal serrations (13).

5. Device according to any one of the preceding claims, **characterised in that** each abutment (14, 15) is in contact with a generatrix of the free core (20).

6. Device according to any one of the preceding claims, **characterised in that** the abutments (14, 15) and the tubes (16, 17) form a single piece made of elastomeric material and fixed by adhesion to the inner surface of the framework (11).

7. Device according to any one of Claims 1 to 5, **characterised in that** the free core (20) is made of steel or cast iron or aluminium and projects from both sides of the outer framework (11).

8. Device according to any one of Claims 1 to 5 or 7, **characterised in that** the free core (20) has a rectangular cross-section, the large faces (21a) of which extend perpendicularly to the axis of the vehicle, each small face (21b) of the free core (20) being arranged in the guiding groove (16a, 17a) of one tube (16, 17) and each large face (21a) being in contact with an abutment (14, 15).

9. Device according to Claim 8, **characterised in that** the free core (20) has an anti-adhesive coating on its outer faces.

10. Device according to Claim 8, **characterised in that** the free core (20) has an axial orifice (22) for the passage of a member (25) for connection to a supporting element (4) integral with the vehicle body.

11. Device according to Claim 12, **characterised in that** the axial orifice (22) has an oblong shape.

12. Device according to Claim 10, **characterised in that** the supporting element (4) is formed by a clevis having two parallel opposite arms, between which the free core (20) is mounted, each arm having a member (27) for rotationally locking the said free core (20).
